# EUROPÄISCHE PATENTSCHRIFT

(11) **EP 1 266 701 B1**
(45) Veröffentlichungstag und Bekanntmachung des Hinweises auf die Patenterteilung: **23.08.2006**
(21) Anmeldenummer: 02011805.5
(22) Anmeldetag: 28.05.2002
(51) Int. Cl.: B05D 1/28, H01M 8/02, H01M 8/04, F28F 3/04, B01J 19/24, B01J 35/04, F28D 9/00, H01M 8/06

(54) **Katalytische Beschichtung von strukturierten Wärmetauschern**
Catalytic coating of structured heat exchangers
Revêtement catalytique pour échangeurs de chaleur structurés

(30) Priorität: 16.06.2001 DE 10129099
(43) Veröffentlichungstag der Anmeldung: 18.12.2002
(73) Patentinhaber: NuCellSys GmbH, 73230 Kirchheim/Teck-Nabern (DE)
(72) Erfinder: Nowak, Dagmar, 71364 Winnenden (DE); Röser, Thomas, Dr., 73265 Dettingen/Teck (DE); Schmidt, Michael, 73235 Weilheim-Hepsisau (DE); Zur Megede, Detlef, Dr., 73230 Kirchheim/Teck (DE)
(74) Vertreter: Finkele, Rolf

(56) Entgegenhaltungen:
- EP-A- 0 173 904
- EP-A- 0 735 602
- EP-A- 1 243 334
- DE-A1- 19 947 803

## Beschreibung

Die Erfindung betrifft ein Verfahren zur Herstellung eines beschichteten, strukturierten Wärmetauscherblechs für einen Reaktor in einem Brennstoffzellensystem.

In DE 199 10 773 A1 ist ein Verfahren zum Aufbringen von Elektrodenschichten auf eine bandförmige Polymerelektrolytmembran für Brennstoffzellen beschrieben. Die Vorder- und Rückseite der Membran wird kontinuierlich im gewünschten Muster mit den Elektrodenschichten unter Verwendung einer einen Elektrokatalysator enthaltenden Tinte bedruckt. Die aufgedruckten Elektrodenschichten werden unmittelbar nach dem Druckvorgang bei erhöhter Temperatur getrocknet, wobei das Bedrucken unter Einhaltung einer positionsgenauen Anordnung der Muster der Elektrodenschichten von Vorder- und Rückseite erfolgt. Der hier auf einer ebenen Fläche durchgeführte Druckvorgang kann neben Schablonen-, Offset- oder Siebdruck auch mittels Tampondruck durchgeführt werden.

Bisher werden strukturierte Wärmetauscherbleche zur Aufbringung von Beschichtungen üblicherweise sprüh-, spül- oder tauchbeschichtet. Bei der Sprühbeschichtung tritt jedoch ein Beschichtungsmassenverlust von bis zu 50% durch Overspray auf. Bei der Herstellung von geschweißten, strukturierten Wärmetauschern aus sprühbeschichteten Blechen, die vollflächig beschichtet sind, treten an den Berührungspunkten Schichtabplatzungen auf. Werden solche geschweißten Reaktoren spüloder tauchbeschichtet, so bilden sich an den Berührstellen Ablagerungen aus, die beim Auftreten von thermischen Spannungen ebenfalls leicht abplatzen. Der hierdurch auftretende Nachteil in Form von ausgetragenem Katalysatorstaub führt nicht nur zu höheren Kosten durch den Katalysatorverlust, sondern stört auch im gesamten Brennstoffzellensystem durch das Auftreten von Verunreinigungen in den Rohrleitungssystemen und als Folge davon durch das Zusetzen der Filter, durch Zündungen in unerwünschten Bereichen des Systems, Beschädigung von Ventilen u.s.w.

Aufgabe der Erfindung ist es daher, ein kostengünstiges Verfahren zur Beschichtung eines strukturierten Wärmetauscherbleches für einen Reáktor zur Verfügung zu stellen, bei dem ein Katalysatoraustrag durch mechanischen und/oder thermischen Stress bei der Herstellung oder im Betrieb eines Brennstoffzellensystems nahezu vermieden wird.

Zur Lösung dieser Aufgabe sieht die vorliegende Erfindung ein Verfahren zur Herstellung eines beschichteten, strukturierten Wärmetauscherblechs für einen Reaktor in einem Brennstoffzellensystems mit den Merkmalen des Patentanspruchs 1 vor. Die weiteren Unteransprüche enthalten vorteilhafte Ausgestaltungen der Erfindung.

Weitere Vorteile des erfindungsgemäßen Verfahrens ergeben sich aus der hohen Prozeßsicherheit des Verfahrens und des daraus resultierenden qualitativ hochwertigen Produkts und der Einsparung von Verfahrensschritten. Außerdem ist dieses Verfahren weitaus umweltverträglicher als die anderen genannten Verfahren, da hier keine Sprühnebel entstehen und kein Overspray anfällt, das bzw. die abgeführt und entsorgt werden muß bzw. müssen.

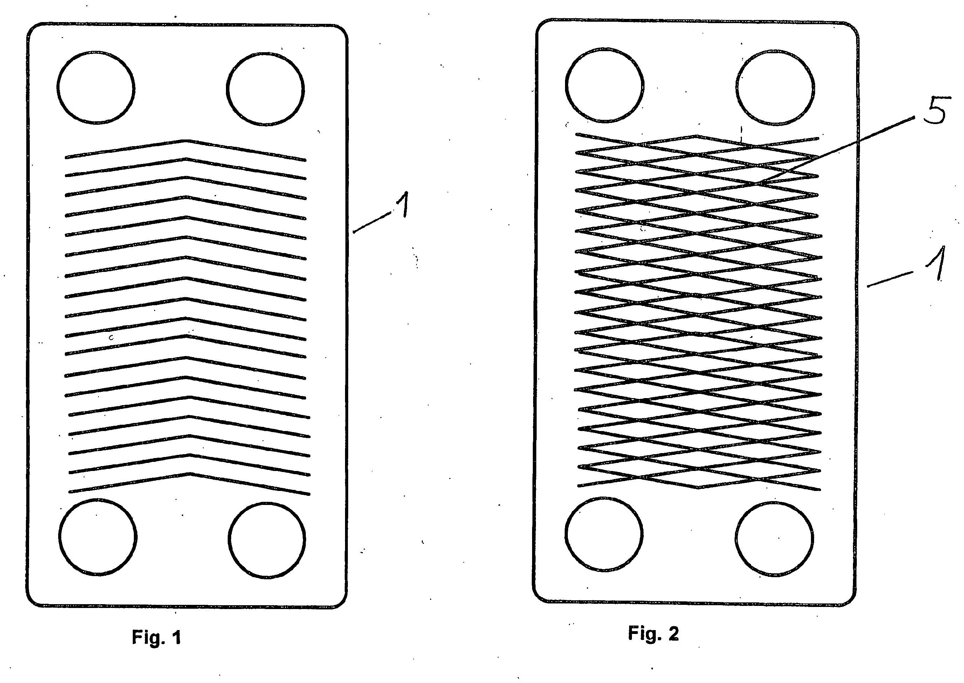

Die Erfindung ist in den Zeichnungen schematisch und beispielhaft dargestellt und wird im Folgenden unter Bezugnahme auf die Zeichnungen näher erläutert. Hier zeigt
- Fig. 1: die Draufsicht eines gewellten Bleches
- Fig. 2: die Überlappung der Wellen beim Stapeln der Bleche und daraus resultierende Berührungspunkte
- Fig. 3: einen Querschnitt durch 2 geschweißte, gewellte Bleche
- Fig. 4: eine Prinzipskizze des Tampondrucks am Beispiel gewellter Bleche

In dem erfindungsgemäßen Verfahren zur Herstellung eines beschichteten, strukturierten Wärmetauscherbleches 1 für einen Reaktor in einem Brennstoffzellensystem wird eine katalytische Komponente in mindestens einer Schicht in kontinuierlicher oder diskontinuierlicher Weise mittels Tampondruck ausschließlich in die Vertiefungen 2 und/oder Flanken 3 des Wärmetauscherbleches 1 aufgebracht. Die Oberfläche der erhabenen Teile 4 des Wärmetauscherblechs werden somit von der Beschichtung ausgespart. Beim Fügen der einzelnen Wärmetauscherbleche zu Reaktoren, die nur umfangsgeschweißt sind, sind somit die Berührungsflächen 5 bzw. Berührungspunkte nicht mit der katalytischen Komponente bedeckt. Aufgrund dieser gezielten Beschichtung wird die Katalysatorablösung bzw. das Abplatzen des Katalysators, welches zum Katalysatoraustrag infolge mechanischem und/oder thermischem Stress führt, minimiert.

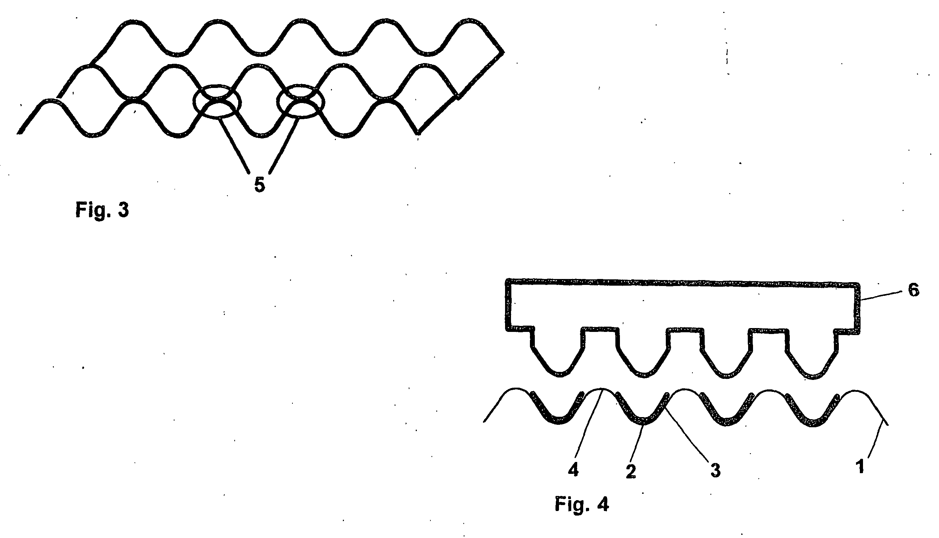

Die Beschichtung dieser strukturierten Bleche wird mittels Tampondruck vorgenommen. Beim Tampondruck handelt es sich um ein indirektes Druckverfahren, d.h. eine Platte, die Klischee genannt wird, dient als Vorlage, auf der das Druckbild als Vertiefung vorhanden ist. Das Klischee wird mittels eines Rakels mit einer sogenannten Druckpaste oder Druckflüssigkeit überschwemmt, die dann mit einem Messer wieder abgezogen wird. In den Vertiefungen des Klischees bleibt die Druckpaste oder Druckflüssigkeit hängen. Ein glatter, elastischer Stempel, genannt Tampon 6, bevorzugt aus Silikonkautschuk hergestellt, nimmt durch Aufdrücken einen Teil dieser Beschichtungsmasse aus den Vertiefungen auf und überträgt diese Masse auf den zu beschichtenden Gegenstand 1. Durch die Elastizität des Silikonkautschuks kann sich der Tampon 6, wie in Fig. 3 dargestellt, bei der Abgabe der Druckpaste oder Druckflüssigkeit dem zu bedruckenden Gegenstand anpassen. Dadurch wird das Bedrucken von nicht ebenen, strukturierten Blechen möglich, bei denen in vorteilhafter Weise nur die Vertiefungen 2 und/oder Flanken 3, nicht aber die erhabenen Flächen 4 des strukturierten Blechs 1 bedruckt werden sollen.

Die Beschichtung des Wärmetauscherblechs mit der katalytischen Komponente kann durch einen oder mehrere Aufdrucke im Gesamtumfang des Bleches erfolgen. Die Beschichtung kann aber auch durch zonenweises Beschichten der Wärmstauscherbleche erfolgen. Durch den Mehrfachdruck lassen sich die einzelnen Schichten funktionalisieren, so daß beispielsweise zum einen am Reaktoreingang ein anderer Katalysator wie am Reaktorausgang aufgebracht, zum anderen über die Blechlänge die Menge an Katalysator zum Aufbau eines Gradienten variiert werden kann. In beiden genannten Fällen dient diese Vorgehensweise zur selektiven Steuerung von Umsätzen und Reaktionen innerhalb des Reaktors. Würde man dieses Vorgehen mittels Sprühbeschichtung durchführen wollen, wären aufwendige Maskierungen der jeweiligen Zonen notwendig. Dies würde das Verfahren zusätzlich zum Oversprayeffekt unnötig verteuern und relativ aufwendig gestalten. Mittels Spül- oder Tauchbeschichtung läßt sich keine zonenweise Beschichtung realisieren, bestenfalls kann ein Gradient in Höhe der Beschichtung aufgebracht werden. Obengenanntes Verfahren kann sowohl in diskontinuierlicher als auch in kontinuierlicher Art und Weise erfolgen, wobei beim Druckvorgang das Blech bzw. Blechband kurz angehalten, bedruckt und anschließend sensorgesteuert um ein bestimmtes Rastermaß weiterbewegt wird. Die mittels Tampondruck aufgebrachten Schichtdicken bewegen sich im Bereich von etwa 5 bis 50 µm der Gesamtschichtdicke.

Die durch Tampondruck aufzubringende katalytische Komponente enthält eine katalytisch aktive und/oder eine wasserabweisende Materialkomponente. Die Beschichtung mit den jeweiligen Materialkomponenten kann in gemischter Form oder als Einzelschicht erfolgen, d.h. auf das Blech wird zunächst eine die katalytisch wirksame Unterschicht und darauf eine die wasserabweisende Materialkomponente enthaltende Oberschicht aufgedruckt. Da der Tampondruck nicht flächenförmig, sondern in Form von Mustern aufgebracht werden kann, wird beim zuerst erfolgten Auftrag der katalytisch aktiven Materialkomponente diese durch den nachfolgenden Aufdruck der wasserabweisenden Materialkomponente nicht vollflächig abgedeckt, so daß die Reaktionsgase und/oder Dämpfe den Katalysator noch erreichen können und damit die katalytische Aktivität erhalten bleibt, aber ein "Überfluten des Katalysators", d.h. eine vollständige Belegung des Katalysators mit Tröpfchen und/oder einem Flüssigkeitsfilm durch Kondensation von Wasserdampf und die damit einhergehende Aktivitätsverminderung oder Desaktivierung des Katalysators, vermieden wird. Zum einen gewährleistet somit der Verbund der katalytisch wirksamen mit der wasserabweisenden Materialkomponente, daß der Katalysator nicht durch Kondensatbildung an kalten Stellen im Brennstoffzellensystem in seiner Reaktivität gehindert ist, sondern vor allem beim Kaltstart weitestgehend zur Verfügung steht, zum anderen verhindert dieser Verbund durch Verkleben und/oder Vernetzen vorteilhafterweise ein Abplatzen oder den Austrag des Katalysators oder vermindert diese Effekte weitestgehend.

Wie bereits in der Patentanmeldung EP 1243334 der Anmelderin beschrieben, werden als katalytisch aktives Material bevorzugt Metalle aus den Nebengruppen des Periodensystems Ib, IIb, VIIb und/oder VIIIb ausgewählt, wobei zusätzlich auch Substanzen enthalten sein können, denen Elemente aus anderen Gruppen des Periodensystems zugrunde liegen, wie beispielsweise Oxide der seltenen Erden zur thermischen Stabilisierung des Katalysators. Die mindestens eine Katalysatormaterialkomponente und/oder katalysatorhaltige Materialkomponente liegt bevorzugt geträgert vor. Entsprechend dem Stand der Technik gibt es eine Reihe von Trägermaterialien für Katalysatoren wie beispielsweise Keramik, Kohlenstoff, Kunststoff, Metall etc. Es eignen sich besonders poröse Feststoffe, auf dessen Oberfläche katalytisch wirksames Material abgeschieden wird. Besonders bevorzugt werden als Trägermaterialien keramische Werkstoffe wie z.B. Zeolithe, Al₂O₃, SiO₂, ZrO₂, CeO₂ und/oder Mischungen davon eingesetzt.

Das mindestens eine wasserabweisende Material enthält bevorzugt Silicone oder siliconhaltige Materialien, fluorierte Polymere wie z.B. Polytetrafluorethylen oder polytetrafluorethylenhaltige Materialien, Epoxidharz oder epoxidharzhaltige Materialien, Phenolharz oder phenolharzhaltige Materialien, Acrylharz oder acrylharzhaltige Materialien, PUR-Klebstoffmaterialien oder PUR-klebstoffhaltige Materialien oder Kunstharz/Schellackgemische oder kunstharzhaltige/schellackhaltige Gemische. Im Bereich der fluorierten Polymere eignet sich besonders Polytetrafluorethylen (PTFE) als wasserabweisende Komponente und Bindemittel für Katalysatoren. Im Bereich der Silicone finden besonders bevorzugt Siliconharze Anwendung, die eine hohe Dauerwärmebeständigkeit im Einsatzbereich aufweisen müssen. Diese Einsatztemperaturen liegen im Bereich zwischen etwa 30°C bis 650°C, bevorzugt im Bereich zwischen etwa 50°C bis 300°C. Als ein weiterer Vorteil zeigt sich, daß bei der Verwendung von Edelmetall als katalytisch aktive Materialkomponente in Verbindung mit Siliconen als wasserabweisende Materialkomponente keine Vergiftungserscheinungen durch Katalysatorgifte auftreten, wie dies z.B. bei der Verwendung von Kupfer als katalytische Komponente der Fall ist.

Es ist außerdem äußerst vorteilhaft, wenn die Schicht, die die wasserabweisende Materialkomponente enthält, eine durch den chemischen Stoff selbst bedingte Elastizität aufweist, die ein Abplatzen oder den Austrag von Katalysator aus der Schicht zusätzlich verhindert oder diese Effekte weitgehend vermindert. Durch die Vernetzung der wasserabweisenden Materialkomponente wirkt diese ferner als ein Bindemittel für den Katalysator. Der Anteil an wasserabweisender Materialkomponente in Bezug auf die katalytisch wirksame Materialkomponente und/oder katalysatorhaltige Materialkomponente beträgt 1 bis 50 Gewichtsprozent, bevorzugt 5 bis 25 Gewichtsprozent.

Die zum Druck benötigte Katalysatorpaste oder -suspension oder -flüssigkeit kann neben mindestens einer katalytisch aktiven Materialkomponente bevorzugt einen keramischen Binder enthalten, der nach Calcinierung an Luft bei etwa 500°C auch vernetzt werden kann, und Wasser. Als keramische Binder eignen sich besonders Oxide und/oder Hydroxide von Al, Ce, Si, Zr und/oder Mischungen davon, wobei vorzugsweise solche Einsatz finden, die vernetzt werden können.

Enthält die zum Druck benötigte Katalysatorpaste oder -suspension oder -flüssigkeit ein polymeres Bindemittel, das bei den für das Calcinieren notwendigen Temperaturen abbaut, entfällt der Calcinierungsschritt und es folgen nur ein oder mehrere Trocknungsschritte. Eine Ausnahme hiervon stellt die Verwendung von PTFE als polymeres Bindemittel dar, da dieses Material kurzzeitig höhere Temperaturen aushält.

Weitere Zusätze, wie beispielsweise zur Steuerung der Viskosität, des Benetzungsverhaltens auf dem Stempel oder zur pH-Einstellung, können in der Druckpaste, -suspension oder -flüssigkeit ebenfalls vorhanden sein. Um ein optimales Druckbild zu erreichen, muß die Form des Stempels der zu bedruckenden Fläche angepaßt sein. Die Anpassung der Verfahrensparameter an den Druckvorgang sind material-, temperatur- und verfahrensschrittabhängig und können mittels üblichem drucktechnischen Können gelöst werden.

Der Druckvorgang selbst wird bei Raumtemperatur durchgeführt, wobei das Druckmedium (der Stempel oder Tampon) und die Beschichtungsmasse (Druckpaste, -suspension oder -flüssigkeit) nicht erwärmt werden.

Das Wärmetauscherblech kann während des Aufbringens der katalytischen Komponente auf bis zu 200°C aufgeheizt werden. Dies bedingt vorteilhafterweise ein schnelleres Abtrocknen der Beschichtungsmasse, vor allem bei Mehrfachdruck.

Sofern beim Aufbringen der Druckpaste, -suspension oder -flüssigkeit auf das Wärmstauscherblech dieses nicht beheizt wird, ist dem Druckschritt ein Trocknungsschritt in einem Temperaturbereich von etwa 100 bis 200°C zur besseren Haftung der Beschichtung nachgeschaltet. Zur Trocknung können Umluft/Durchlauftrockner, aber auch Strahlungstrockner, z.B. mittels Infrarot, eingesetzt werden. Die benötigte Trocknungszeit wird über die Durchlaufgeschwindigkeit des Bleches oder Blechbandes geregelt. An den Trocknungsschritt können sich weitere Druckvorgänge anschließen.

Anschließend wird der das Verfahren abschließende Calcinierungsschritt bei etwa 500°C durchgeführt, der zur endgültigen Trocknung und zur Vernetzung des in der Beschichtung enthaltenen keramischen Binders beiträgt. Die Dauer des Calcinierungsschrittes bewegt sich zwischen 0,5 bis 4 Stunden.

Wird als wasserabweisende Materialkomponente beispielsweise Silikon oder silikonhaltiges Material, das bei den für das Calcinieren notwendigen Temperaturen abbaut, verwendet, muß der Calcinierungsschritt vor dem Auftrag des Silikon oder silikonhaitigen Materials erfolgen. Zur Trocknung der nachfolgend aufgebrachten Silikon- oder silikonhaltigen Schicht wird bzw. werden noch ein oder mehrere Trocknungsschritte nachgeschaltet.

Die nach dem erfindungsgemäßen Verfahren hergestellten Wärmetauscherbleche eignen sich gleichermaßen für den Einsatz als Reaktor in Wasserstoff-, Reformat- und Direkt-Methanolbetriebenen Brennstoffzellensystemen.

## Patentansprüche

1. Verfahren zur Herstellung eines beschichteten, strukturierten Wärmetauscherbleches für einen Reaktor in einem Brennstoffzellensytem, wobei eine katalytische Komponente in mindestens einer Schicht in kontinuierlicher oder diskontinuierlicher Weise mittels Tampondruck ausschließlich in die Vertiefungen und/oder Flanken des Wärmetauscherbleches aufgebracht wird.

2. Verfahren nach Anspruch 1,
**dadurch gekennzeichnet,**
**daß** die katalytische Komponente zonenweise aufgebracht wird.

3. Verfahren nach Anspruch 1,
**dadurch gekennzeichnet,**
**daß** die katalytische Komponente eine katalytisch aktive Materialkomponente und/oder eine wasserabweisende Materialkomponente enthält.

4. Verfahren nach Anspruch 3,
**dadurch gekennzeichnet,**
**daß** die katalytisch wirksame Materialkomponente bevorzugt geträgert vorliegt.

5. Verfahren nach Anspruch 3,
**dadurch gekennzeichnet,**
**daß** die katalytisch wirksame Materialkomponente ein keramisches und/oder ein polymeres Bindemittel enthält.

6. Verfahren nach Anspruch 3, wobei die Zusammensetzung und/oder Konzentration der katalytisch aktiven Materialkomponente über die Länge des Wärmetauscherbleches variiert ist.

7. Verfahren nach Anspruch 1,
**dadurch gekennzeichnet,**
**daß** der Druckvorgang bei Raumtemperatur durchgeführt wird, wobei Druckmedium und Beschichtungsmasse nicht erwärmt werden.

8. Verfahren nach Anspruch 7,
**dadurch gekennzeichnet,**
**daß** nach dem Druckschritt ein Trocknungsschritt in einem Temperaturbereich von etwa 100 bis 200°C durchgeführt wird.

9. Verfahren nach Anspruch 7,
**dadurch gekennzeichnet,**
**daß** das Wärmetauscherblech während des Aufbringens der katalytischen Komponente beheizt wird.

10. Verfahren nach Anspruch 8 oder 9,
**dadurch gekennzeichnet,**
**daß** der das Verfahren abschließende Calcinierungsschritt bei einer Temperatur von etwa 500°C durchgeführt wird.

## Claims

1. Process for producing a coated, structured heat exchanger plate for a reactor in a fuel cell system, in which a catalytic component is applied continuously or discontinuously in at least one layer, by means of pad printing, exclusively in the recesses and/or flanks of the heat exchanger plate.

2. Process according to Claim 1, **characterized in that** the catalytic component is applied zone by zone.

3. Process according to Claim 1, **characterized in that** the catalytic component contains a catalytically active material component and/or a hydrophobic material component.

4. Process according to Claim 3, **characterized in that** the catalytically active material component is preferably in supported form.

5. Process according to Claim 3, **characterized in that** the catalytically active material component contains a ceramic and/or polymeric binder.

6. Process according to Claim 3, in which the composition and/or concentration of the catalytically active material component is varied over the length of the heat exchanger plate.

7. Process according to Claim 1, **characterized in that** the printing operation is carried out at room temperature, without the printing medium and coating material being heated.

8. Process according to Claim 7, **characterized in that** after the printing step a drying step is carried out in a temperature range from approximately 100 to 200°C.

9. Process according to Claim 7, **characterized in that** the heat exchanger plate is heated while the catalytic component is being applied.

10. Process according to Claim 8 or 9, **characterized in that** the calcining step which concludes the process is carried out at a temperature of approximately 500°C.

## Revendications

1. Procédé de préparation d'une tôle revêtue et structurée pour un échangeur de chaleur du réacteur d'un système de cellule à combustible, dans lequel un composant catalytique est appliqué par impression au tampon en au moins une couche, de manière continue ou discontinue uniquement dans les creux et/ou les flancs de la tôle de l'échangeur de chaleur.

2. Procédé selon la revendication 1, **caractérisé en ce que** le composant catalytique est appliqué par zones.

3. Procédé selon la revendication 1, **caractérisé en ce que** le composant catalytique contient un composant catalytiquement actif et/ou un composant qui repousse l'eau.

4. Procédé selon la revendication 3, **caractérisé en ce que** le composant catalytiquement actif se présente de préférence sous forme portée.

5. Procédé selon la revendication 3, **caractérisé en ce que** le composant catalytiquement actif contient un liant céramique et/ou un liant polymère.

6. Procédé selon la revendication 3, dans lequel la composition et/ou la concentration du composant catalytiquement actif varie suivant la longueur de la tôle de l'échangeur de chaleur.

7. Procédé selon la revendication 1, **caractérisé en ce que** l'opération d'impression est réalisée à température ambiante, le fluide d'impression et la pâte d'application n'étant pas chauffés.

8. Procédé selon la revendication 7, **caractérisé en ce qu'**après l'étape d'impression, on réalise une étape de séchage dans une plage de température comprise entre environ 100 et 200°C.

9. Procédé selon la revendication 7, **caractérisé en ce que** la tôle d'échangeur de chaleur est chauffée pendant l'application du composant catalytique.

10. Procédé selon les revendications 8 ou 9, **caractérisé en ce que** l'étape de calcination qui termine le procédé est réalisée à une température d'environ 500°C.
